# FASCICULE DE BREVET EUROPEEN

(11) **EP 2 676 338 B1**
(45) Date de publication et mention de la délivrance du brevet: **19.09.2018**
(21) Numéro de dépôt: 12709907.5
(22) Date de dépôt: 14.02.2012
(51) Int. Cl.: H01S 3/067, H01S 3/094, H01S 3/16, H01S 3/23, H01S 3/00

(54) **LASER A FIBRE OPTIQUE DE FORTE PUISSANCE**
HOCHLEISTUNGS-GLASFASERLASER
HIGH-POWER OPTICAL FIBRE LASER

(30) Priorité: 15.02.2011 FR 1151237
(43) Date de publication de la demande: 25.12.2013
(73) Titulaire: IXBLUE, 78100 Saint-Germain-en-Laye (FR); Centre National de la Recherche Scientifique, 75794 Paris Cedex 16 (FR)
(72) Inventeur: LAROCHE, Mathieu, F-14250 Cristot (FR); GILLES, Hervé, F-14670 Bures Sur Dives (FR); GIRARD, Sylvain, F-14790 Verson (FR); ROBIN, Thierry, F-22450 Camlez (FR); CADIER, Benoît, F-22700 Perros Guirec (FR)
(74) Mandataire: Jacobacci Coralis Harle
(86) Numéro de dépôt international: PCT/FR2012/050319
(87) Numéro de publication internationale: WO 2012/110739

(56) Documents cités:
- US-A1- 2003 063 629
- US-A1- 2006 280 217
- US-A1- 2010 135 339
- MINELLY J D ET AL: "HIGH-GAIN FIBER POWER AMPLIFIER TANDEM-PUMPED BY A 3-W MULTISTRIPE DIODE", PROCEEDINGS OF THE OPTICAL FIBER COMMUNICATION CONFERENCE. SAN JOSE, FEB. 2 - 7, 1992; [PROCEEDINGS OF THE OPTICAL FIBER COMMUNICATION CONFERENCE], NEW YORK, IEEE, US, vol. 5, 2 février 1992 (1992-02-02), pages 32-33, XP000341534, ISBN: 978-1-55752-222-1
- D. J. RICHARDSON ET AL: "High power fiber lasers: current status and future perspectives [Invited]", JOURNAL OF THE OPTICAL SOCIETY OF AMERICA B, vol. 27, no. 11, 22 octobre 2010 (2010-10-22), page B63, XP055007201, ISSN: 0740-3224, DOI: 10.1364/JOSAB.27.000B63

## Description

La présente invention concerne un laser à fibre optique de forte puissance. Plus précisément, l'invention concerne un laser à fibre émettant dans des longueurs d'onde situées dans la bande bleue du spectre visible. Le laser à fibre permet de générer un rayonnement continu ou impulsionnel dans le régime nanoseconde.

Depuis son invention il y a cinquante ans, le laser a connu des développements extraordinaires permettant aujourd'hui de disposer de lasers fournissant des énergies ou des puissances de plus en plus élevées, dans des domaines de longueurs d'onde couvrant tout le spectre optique, et avec des durées d'impulsions de plus en plus courtes atteignant le domaine femtoseconde. Un autre axe de développement vise à accroître l'intégration des systèmes lasers, notamment par l'utilisation de sources compactes, de diodes laser de pompe et/ou de milieux amplificateurs à fibre optique.

Les diodes laser monomode à 980nm disponibles dans le commerce ont non seulement des puissances inférieures au Watt en régime continu, mais ne permettent pas d'atteindre de fortes puissances crêtes.

Des lasers à fibre dopées Ytterbium ont été proposés comme sources laser à 980 nm. Toutefois, l'émission à 980nm requiert une fluence de pompe très élevée, du fait des niveaux de population de l'Ytterbium. L'émission d'un faisceau laser d'une puissance de 3.5 W a été démontrée avec une fibre microstructurée à gaine d'air et à guide dopé Ytterbium pour assurer le niveau de fluence de pompe (K. H. Ylä-Jarkko et al., Advanced Solid-State Photonics, Vol. 83, OSA Trends in Optics and Photonics, 2003, paper 103). Plus récemment, on a développé des lasers à fibre photonique comprenant un barreau dopé Ytterbium ayant un faible rapport entre diamètre de coeur et diamètre de gaine, qui permettent d'obtenir un faisceau laser de forte puissance (94W) à 980nm en continu (J.Boullet et al., Opt. Express 16, 17891, 2008 et F. Roeser et al. Opt. Express 16, 17310, 2008). Des impulsions nanosecondes d'environ 1mJ ont aussi été obtenues avec de telles fibres photoniques. Toutefois, l'utilisation de fibres photoniques pose des difficultés de fabrication et ne permet pas de fabriquer un système laser compact et entièrement fibré.

US2006/0280217 A1 décrit un système laser MOPA à double schéma de pompage qui utilise un convertisseur de brillance pour pomper un guide d'onde, et comportant: un module de diodes de pompe, émettant un rayonnement de pompe de faible brillance; une cavité laser comprenant le convertisseur de brillance dopé néodyme et/ou ytterbium, la cavité laser étant fermée à ses extrémités par des réflecteurs; et un guide d'onde dopé ytterbium. Le convertisseur de brillance convertit un rayonnement de faible brillance à une longueur d'onde de 810 nm en un rayonnement de forte brillance à une longueur d'onde qui est absorbée par l'Ytterbium.

On cherche actuellement à développer des lasers de forte puissance robustes, compacts fonctionnant en régime continu ou impulsionnel. On cherche à développer des lasers à fibre émettant vers 980 nm, ainsi que dans la partie bleue du spectre visible à des puissances de l'ordre du Watt. Ces lasers trouvent des applications dans de nombreux domaines tels que la spectroscopie de fluorescence, la cytométrie en flux, les biotechnologies, la métrologie, les LIDAR et en particulier leur utilisation en bathymétrie.

La présente invention a pour but de remédier à ces inconvénients et concerne plus particulièrement un laser à fibre optique de forte puissance comme défini dans la revendication 1. Le laser comprend un oscillateur apte à émettre un signal optique source à amplifier, un laser de pompe apte à émettre un rayonnement optique de pompe de forte puissance, une fibre optique amplificatrice de signal, apte à recevoir ledit signal optique source et ledit rayonnement optique de pompe de forte puissance. Selon l'invention, ledit laser de pompe comprend une pluralité de diodes laser multimodes de pompe et une cavité laser, ladite cavité laser comprenant une fibre double gaine comprenant un guide monomode dopé néodyme, un réseau de Bragg à fibre optique formant une extrémité de ladite cavité laser et un réflecteur à fibre formant l'autre extrémité de ladite cavité laser, ladite fibre laser monomode étant apte à générer un rayonnement laser lorsqu'elle est pompée optiquement par un rayonnement de pompe provenant de la pluralité de diodes laser de pompe de manière à ce que ladite cavité laser émette un rayonnement laser de pompe de forte puissance, et ladite fibre optique amplificatrice de signal comprend une section de fibre optique monomode dopée terre rare, de manière à générer un faisceau laser de forte puissance, lorsque ladite fibre optique amplificatrice de signal est pompée optiquement par ledit rayonnement optique de pompe de forte puissance.

Selon l'invention
- ladite section de fibre optique monomode de ladite fibre optique amplificatrice de signal comprend un guide dopé Ytterbium.

Selon un aspect particulier de l'invention
- ladite fibre optique amplificatrice de signal a un fort taux de dopage en ions de manière à ce que la longueur de ladite section de fibre optique monomode de ladite fibre optique amplificatrice de signal soit inférieure à quelques dizaines de centimètres.

Selon un mode de réalisation particulier, le laser à fibre comprend un convertisseur optique de fréquence, ledit convertisseur étant apte à recevoir ledit faisceau laser de forte puissance provenant de ladite fibre optique amplificatrice de signal dans une bande de longueurs d'onde et à convertir en fréquence ledit faisceau laser de forte puissance de manière à générer ledit faisceau laser de forte puissance dans une autre bande de longueurs d'onde.

Selon un aspect particulier de ce mode de réalisation, ledit laser à fibre comprend en outre un moyen de filtrage optique disposé entre une extrémité de sortie de ladite fibre optique amplificatrice de signal et une entrée dudit convertisseur optique de fréquence, ledit moyen de filtrage optique étant apte à séparer un rayonnement optique à la longueur d'onde de pompe de forte puissance et un rayonnement optique à la longueur d'onde dudit signal optique amplifié.

Selon d'autres aspects particuliers de l'invention, ledit laser à fibre comprend :
- un moyen optique de couplage de pompe apte à recevoir les rayonnements laser de pompe provenant desdites diodes laser de pompe et à coupler lesdits rayonnements laser de pompe à ladite fibre optique amplificatrice de pompe ;
- des moyens optiques de couplage aptes à coupler respectivement ledit signal optique source à amplifier et ledit rayonnement optique de pompe de forte puissance dans ladite fibre optique amplificatrice de signal ;
- ledit oscillateur comprend une diode laser fibrée couplée à un générateur d'impulsions de manière à générer des impulsions laser de forte puissance.
Cette description donnée à titre d'exemple non limitatif fera mieux comprendre comment l'invention peut être réalisée en référence aux dessins annexés sur lesquels :
- la figure 1 représente schématiquement un laser à fibre de type MOPA selon un mode de réalisation de l'invention ;
- la figure 2 représente l'accord en longueur d'onde autour de 978 nm du système en régime continu ;
- la figure 3 représente une courbe de puissance de sortie à 978 nm en fonction de la puissance de pompe en régime impulsionnel ;
- la figure 4 représente le spectre en longueur d'onde du signal laser autour de 978nm en sortie de l'amplificateur ;
- la figure 5 représente une courbe de puissance de sortie à 489 nm en fonction de la puissance de pompe en régime impulsionnel ;
- la figure 6 représente une courbe d'intensité d'émission d'une impulsion laser en fonction de la longueur d'onde dans la partie bleue du spectre visible.
Le laser repose sur un schéma original de pompage et d'amplification, qui décrit en détail en lien avec la figure 1.

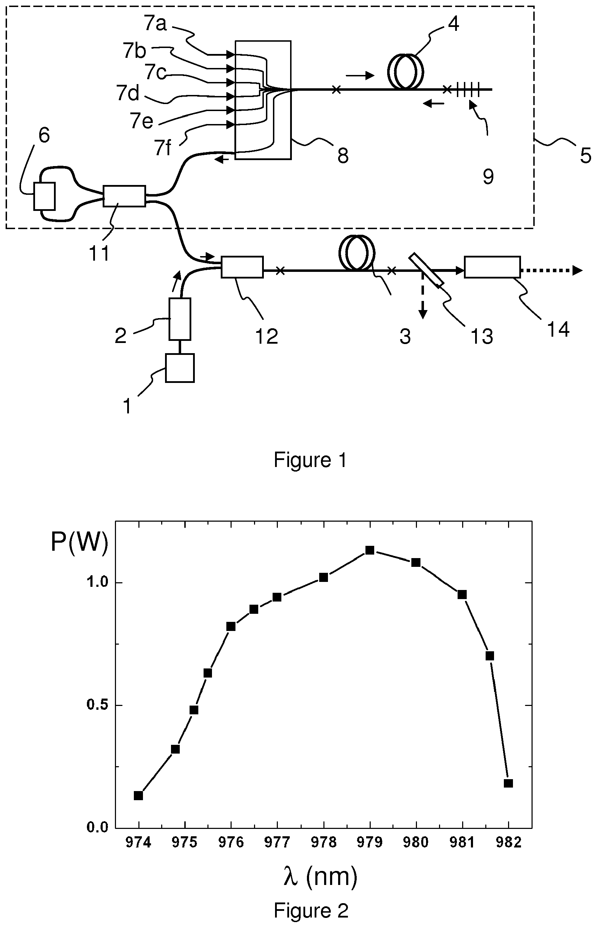

La figure 1 représente schématiquement un laser à fibre de type MOPA (Master Oscillator Power Amplifier). Le laser comprend un oscillateur (1) maître qui est une diode laser fibrée émettant à la longueur d'onde d'environ 978 nm, soit en régime continu soit en régime impulsionnel. L'oscillateur (1) maître est soit piloté par une source de courant soit commuté en gain par un générateur d'impulsions. Cet oscillateur (1) comprend une diode laser Fabry-Perot à commutation de gain à spectre étroit (spectrally narrowed gain-switched FP laser diode), couplée à un réseau de diffraction dans une cavité externe. En mode impulsionnel, cet oscillateur (1) permet de générer des impulsions ayant une durée d'environ 10 nanosecondes, une puissance moyenne de 1.5 mW à une fréquence de répétition de 1.5 MHz et une largeur spectrale inférieure à 0.05 nm (limite de résolution de l'analyseur de spectre optique). Un isolateur optique (2) placé devant l'oscillateur (1) permet de protéger l'oscillateur (1) vis à vis des impulsions laser amplifiées en retour.
Une source de pompe (5) est couplée à une fibre amplificatrice de signal (3). On choisit de pomper la fibre amplificatrice de signal (3) à une longueur d'onde d'environ 930 nm. La source de pompe (5) comprend une fibre optique amplificatrice de pompe (4). La fibre amplificatrice de pompe (4) est de préférence une fibre dopée terre rare. Dans le mode de réalisation représenté sur la figure 1, la fibre amplificatrice de pompe (4) est une fibre double gaine (double-clad) dopée néodyme. La fibre amplificatrice de pompe (4) est une fibre double-gaine (ou DCF pour Double Clad Fiber), ayant un profil d'indice de réfraction à fuite. Le coeur de la fibre amplificatrice de pompe (4) est monomode, avec un diamètre de coeur d'environ 5 microns, et une ouverture numérique (NA) d'environ 0.14. La source de pompe (5) comprend au moins une diode laser de pompe apte à pomper la fibre amplificatrice de pompe (4). Dans l'exemple de la figure 1, la source de pompe (5) comprend six diodes laser de pompe (7a, 7b, 7c, 7d, 7e, 7f) émettant un signal de pompe à 808 nm. Chaque diode multimode (7a, 7b, 7c, 7d, 7e, 7f) a une puissance d'environ quelques Watts, pour une puissance de pompe totale égale à 12 W. Les signaux de pompe provenant des diodes laser de pompe (7a, 7b, 7c, 7d, 7e, 7f) sont combinés au moyen d'un coupleur directionnnel (8) qui permet de combiner des signaux de pompe et un signal amplifié. Les signaux de pompe des diodes laser de pompe (7a, 7b, 7c, 7d, 7e, 7f) sont ainsi injectés dans la gaine multimode de la fibre amplificatrice double-gaine (3). La cavité laser est formée à une extrémité par une fibre optique à réseau de Bragg (9) ou FBG et à l'autre extrémité par un miroir à fibre basé sur un coupleur à fibre 98:2 (11) et un contrôleur de polarisation (6) de manière à fournir un ajustement fin du coefficient de réflexion ; cependant ce système peut être avantageusement remplacé par un réseau de Bragg à faible réflectivité. Le FBG est fusionnée à une extrémité de la fibre amplificatrice de pompe (3). Le FBG filtre et réfléchit le signal de pompe amplifié à 930 nm. La fibre amplificatrice de pompe (4) est avantageusement une fibre à coeur dopé néodyme ayant une longueur de 25m, un diamètre de gaine de 125 µm, un diamètre de coeur de 5 µm et une ouverture numérique de 0.11. Un coupleur directionnel (8) de pompe et de signal de pompe, laisse passer le signal de pompe amplifié dans la cavité laser. On dispose ainsi d'une source de pompe (5) entièrement fibrée apte à émettre un signal de pompe à 930 nm de forte puissance. Dans un exemple de réalisation, avec une puissance totale de pompe de 12W à 808nm, on obtient un signal de pompe continu à 930nm ayant une puissance de 2.7 W en sortie du coupleur multiplexeur (11).

La fibre amplificatrice de signal (3) est de préférence une fibre dopée terre rare. Dans le mode de réalisation représenté sur la figure 1, la fibre amplificatrice de signal (3) est une fibre fortement dopée Ytterbium à coeur monomode. La longueur de la fibre amplificatrice de signal (3) est critique pour éviter une émission autour de 1080 nm et pour obtenir une forte efficacité d'amplification au voisinage de 978 nm. Dans un exemple de réalisation, la longueur optimale de la fibre Ytterbium amplificatrice de signal (3) est de 19 cm ± 0.5 cm. Cette courte longueur de fibre amplificatrice de signal (3) permet d'éviter l'apparition d'effets non linéaires indésirables. Cette configuration permet de maintenir la qualité spectrale du signal qui est nécessaire pour une conversion de fréquence efficace.

Nous allons d'abord illustrer le fonctionnement du laser en régime continu puis en régime impulsionnel.

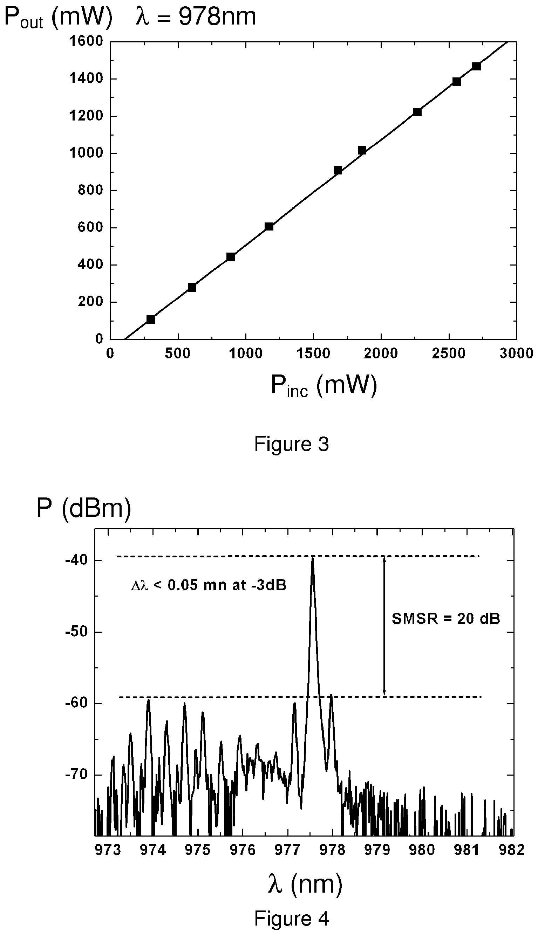

La figure 3 représente une courbe de gain de la fibre amplificatrice de signal (3) représentant la puissance en sortie en fonction de la puissance de pompe autour de 978 nm en régime continu. En régime continu, on obtient une efficacité de 81.4% par rapport à la puissance incidente de pompe à 930 nm. On observe l'accord en longueur d'onde du laser aux environs de 980 nm la largeur de bande spectrale étant d'environ 6nm. On obtient une puissance maximum de 2.1 W à 978 nm avec un faisceau limité par la diffraction. La puissance seuil de pompe est de 0.12 W. Un coupleur multiplexeur (12) à fibre permet de combiner la pompe et le signal à amplifier pour les coupler directement dans le coeur de la fibre amplificatrice (3).

Selon une variante préférée, on utilise un générateur d'harmonique double (14) ou SHG (pour second harmonic generator) en sortie de la fibre amplificatrice de signal (3) afin de produire un signal laser dans la partie bleue du spectre visible. On place un filtre dichroïque (13) en sortie de la fibre amplificatrice de signal (3) afin de séparer le signal de pompe à 930 nm et le signal amplifié à 978 nm. Le générateur d'harmonique double (14), encore appelé doubleur de fréquence, permet ainsi d'obtenir un signal laser continu à 489 nm. Selon un exemple de réalisation, le générateur d'harmonique double (14) est un cristal de PPLN dopé MgO ayant une longueur de 10 mm, provenant le société Covesion. La largeur spectrale du signal laser de sortie à 489 nm est inférieure à 0.05 nm, qui est la limite de résolution de l'analyseur de spectre optique utilisé.

En régime impulsionnel nanoseconde, on utilise un commutateur de gain pour faire fonctionner la diode laser de source. La figure 4 représente une courbe d'amplification en fonction de la longueur d'onde à 978 nm. On observe une efficacité de 58% (puissance émise à 978nm par rapport à la puissance incidente), inférieure à l'efficacité obtenue en régime continu, du fait de la faible puissance des impulsions laser d'entrée (environ 0.5 W). La fréquence de répétition optimum pour générer une puissance pic élevée est de 1.2 MHz. Le gain d'amplification est de 35 dB. La puissance crête de sortie est de 120 W. 89 % du signal de sortie reste dans le pic principal, dont la largeur spectrale est inférieure à 0.05 nm.

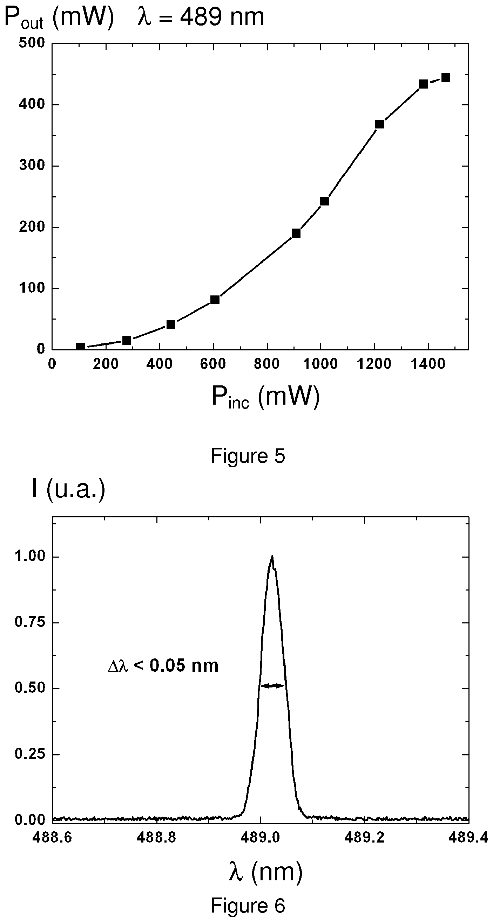

Il est aussi possible d'utiliser le filtre dichroïque (13) et le générateur d'harmonique double (14) en régime impulsionnel, pour générer des impulsions laser à 489 nm, selon le schéma de la figure 1. La figure 5 représente une courbe de puissance de sortie à 489 nm en fonction de la puissance de pompe en régime impulsionnel. Dans un exemple de réalisation, l'efficacité de conversion du générateur d'harmonique double (14) est de 30.5 % en régime impulsionnel. Toutefois, cette efficacité de conversion est actuellement limitée par les effets thermiques se produisant dans le cristal non linéaire de PPLN. La figure 6 représente une courbe d'intensité d'émission d'une impulsion laser amplifiée en fonction de la longueur d'onde dans la partie bleue du spectre, autour de 489 nm. On observe une grande pureté spectrale de l'impulsion laser amplifiée et doublée en fréquence à 489 nm, ainsi qu'une grande qualité spatiale. On obtient ainsi des impulsions laser à 489 nm ayant une puissance de 0.45 W en régime nanoseconde.
L'optimisation des paramètres de la fibre amplificatrice de signal (3) peut permettre d'optimiser le gain d'amplification à 980 nm. D'autre part, l'optimisation des impulsions laser source peut permettre d'obtenir une meilleure saturation du laser MOPA.

L'invention permet de produire une source MOPA totalement fibrée utilisant une fibre amplificatrice dopée Ytterbium émettant à 980 nm, pompée par un laser à fibre dopée Néodyme à profil d'indice de réfraction à fuites émettant à la longueur d'onde de 930 nm lui même pompé optiquement par des diodes fibrées émettant à 806 nm. Par exemple, le profil de la fibre peut être du type en W. Le système MOPA émet en continu ou en impulsionnel et l'émission à 980 nm peut être efficacement doublée en fréquence pour obtenir une émission à 490 nm. L'invention trouvera une application particulièrement avantageuse dans les lasers à fibre continus ou impulsionnels émettant dans le spectre visible, et notamment dans la partie bleue du spectre visible.

L'invention propose un laser entièrement fibré de type MOPA (Master Oscillator Power Amplifier) basé sur des fibres monomodes. Le laser fournit des impulsions laser ayant une puissance de 2.1 W à 978 nm. La faible longueur de la fibre amplificatrice de signal permet d'éviter ou de limiter l'apparition d'effets non linéaires indésirables et de maintenir la qualité spectrale et spatiale du faisceau nécessaire pour obtenir une forte efficacité de conversion en fréquence, dans un cristal de PPLN par exemple. On obtient ainsi par exemple des impulsions laser ayant une puissance de 0.45 W à 489 nm.

## Revendications

1. Laser à fibre optique de forte puissance et entièrement fibré comprenant :
- un oscillateur (1) apte à émettre un signal optique source à amplifier, ledit oscillateur(1) comprenant une diode laser fibrée émettant à la longueur d'onde d'environ 978 nm,
- un laser de pompe (5) apte à émettre un rayonnement optique de pompe de forte puissance,
- une fibre optique amplificatrice de signal (3), apte à recevoir ledit signal optique source et ledit rayonnement optique de pompe de forte puissance, où:
- ledit laser de pompe (5) comprend une pluralité de diodes laser multimodes de pompe (7a, 7b, 7c, 7d, 7e, 7f) fibrées émettant à 806 nm et une cavité laser entièrement fibrée, ladite cavité laser comprenant une fibre double gaine ayant un profil d'indice de réfraction à fuites, du type en W, et un coeur monomode dopé néodyme (4), la fibre double gaine ayant une longueur d'environ 25m, un diamètre de gaine d'environ 125 microns, un diamètre de coeur d'environ 5 microns, un réseau de Bragg à fibre optique (9) formant une extrémité de ladite cavité laser et un réflecteur à fibre (11) formant l'autre extrémité de ladite cavité laser, ladite fibre double gaine étant apte à générer un rayonnement laser à une longueur d'onde de 930 nm lorsqu'elle est pompée optiquement par un rayonnement de pompe à une longueur d'onde de 806 nm provenant de la pluralité de diodes laser de pompe (7a, 7b, 7c, 7d, 7e, 7f) et injecté dans la gaine multimode de ladite fibre double-gaine, de manière à ce que ladite cavité laser émette un rayonnement laser de pompe de forte puissance à la longueur d'onde de 930 nm,et
- ladite fibre optique amplificatrice de signal (3) comprend une section de fibre optique monomode dopée Ytterbium, de manière à générer un faisceau laser de forte puissance au voisinage de 978 nm, lorsque ladite fibre optique amplificatrice de signal (3) est pompée optiquement par ledit rayonnement optique de pompe de forte puissance à la longueur d'onde de 930 nm.

2. Laser à fibre selon la revendication 1, **caractérisé en ce que** ladite fibre optique amplificatrice de signal (3) a un fort taux de dopage en ions de manière à ce que la longueur de ladite section de fibre optique monomode de ladite fibre optique amplificatrice de signal (3) soit inférieure à quelques dizaines de centimètres, notamment ladite longueur est de 19 cm ± 0.5 cm.

3. Laser à fibre selon l'une des revendications 1 ou 2, **caractérisé en ce qu'**il comprend un convertisseur optique de fréquence (14), ledit convertisseur (14) étant un générateur d'harmonique double (14) apte à recevoir ledit faisceau laser de forte puissance provenant de ladite fibre optique amplificatrice de signal (3) dans une bande de longueurs d'onde au voisinage de 978 nm et à convertir en fréquence ledit faisceau laser de forte puissance de manière à générer ledit faisceau laser de forte puissance dans une autre bande de longueurs d'onde à 489 nm.

4. Laser à fibre selon la revendication 3, **caractérisé en ce qu'**il comprend un moyen de filtrage optique (13) disposé entre une extrémité de sortie de ladite fibre optique amplificatrice de signal (3) et une entrée dudit convertisseur optique de fréquence (14), ledit moyen de filtrage optique (13) étant apte à séparer un rayonnement optique à la longueur d'onde de pompe de forte puissance et un rayonnement optique à la longueur d'onde dudit signal optique amplifié.

5. Laser à fibre selon l'une des revendications 1 à 4, **caractérisé en ce qu'**il comprend un moyen optique de couplage de pompe (8) apte à recevoir les rayonnements laser de pompe provenant desdites diodes laser de pompe (7a, 7b, 7c, 7d, 7e, 7f) et à coupler lesdits rayonnements laser de pompe à ladite fibre optique amplificatrice de pompe (4).

6. Laser à fibre selon l'une des revendications 1 à 5, **caractérisé en ce qu'**il comprend des moyens optiques de couplage (12) aptes à coupler respectivement ledit signal optique source à amplifier et ledit rayonnement optique de pompe de forte puissance dans ladite fibre optique amplificatrice de signal (3), lesdits moyens optiques de couplage (12) comprenant un coupleur multiplexeur à fibre apte à combiner le rayonnement laser de pompe à une longueur d'onde de 930 nm et le signal à amplifier au voisinage de 978 nm pour les coupler directement dans le coeur de la fibre amplificatrice (3).

7. Laser à fibre selon l'une des revendications 1 à 6 **caractérisé en ce que** ledit oscillateur (1) comprend une diode laser fibrée couplée à un générateur d'impulsions et **en ce que** ledit laser à fibre est apte à générer des impulsions laser de forte puissance.

## Patentansprüche

1. Vollständig mit Fasern ausgestatteter Hochleistungs-Glasfaserlaser mit
- einem Oszillator (1), der dazu ausgelegt ist, ein zu verstärkendes optisches Quellsignal auszusenden, wobei der Oszillator (1) eine Laserdiode mit Fasern aufweist, die bei einer Wellenlänge von etwa 978 nm abstrahlt,
- einem Pumplaser (5), der dazu ausgelegt ist, eine optische Pumpstrahlung hoher Leistung abzustrahlen,
- einer Signalverstärkungsglasfaser (3), die dazu ausgelegt ist, das optische Quellsignal und die optische Pumpstrahlung hoher Leistung zu empfangen,
wobei
- der Pumplaser (5) eine Anzahl Multimode-Pumplaserdioden mit Fasern (7a, 7b, 7c, 7d, 7e, 7f), die mit 806 nm abstrahlen, und einen vollständig mit Fasern ausgestatteten Laserhohlraum aufweist, wobei der Laserhohlraum eine Faser mit doppelter Faserhülle aufweist, die ein Brechungsindexprofil mit Verlusten, d.h. vom W-Typ, und einen mit Neodym dotierten Monomode-Kern (4) aufweist, wobei die Faser mit doppelter Faserhülle eine Länge von etwa 25 m, einen Hüllendurchmesser von etwa 125 µm, einen Kerndurchmesser von etwa 5 µm aufweist, wobei ein Glasfaser-Bragg-Gitter (9) ein Ende des Laserhohlraums bildet und ein Glasfaserreflektor (11) das andere Ende des Laserhohlraums bildet, wobei die Faser mit doppelter Faserhülle dazu ausgelegt ist, eine Laserstrahlung mit einer Wellenlänge von 930 nm zu erzeugen, wenn sie optisch durch eine Pumpstrahlung mit einer Wellenlänge von 806 nm gepumpt wird, die von der Anzahl Multimode-Pumplaserdioden mit Fasern (7a, 7b, 7c, 7d, 7e, 7f) kommt und in die Multimode-Hülle der Faser mit doppelter Faserhülle eingeleitet wird, so daß der Laserhohlraum eine Pumplaserstrahlung hoher Leistung mit einer Wellenlänge von 930 nm abstrahlt, und
- die Signalverstärkungsglasfaser (3) einen mit Ytterbium dotierten Monomode-Glasfaserabschnitt aufweist, um einen Hochleistungs-Laserstrahl im Bereich von 978 nm zu erzeugen, wenn die Signalverstärkungsglasfaser (3) optisch durch die Pumplaserstrahlung hoher Leistung mit der Wellenlänge von 930 nm gepumpt wird.

2. Faserlaser gemäß Anspruch 1, **dadurch gekennzeichnet, daß** die Signalverstärkungsglasfaser (3) ein hohes Ionendotierungsniveau hat, damit die Länge des Monomode-Glasfaserabschnitts der Signalverstärkungsglasfaser (3) kleiner als einige Zehnereinheiten von cm und die Länge insbesondere 19 + 0,5 cm ist.

3. Faserlaser gemäß einem der Ansprüche 1 oder 2, **dadurch gekennzeichnet, daß** er einen optischen Frequenzwandler (14) aufweist, wobei der Wandler (14) ein Generator zur Erzeugung doppelter Harmonischer (14) ist, der dazu ausgelegt ist, den von der Signalverstärkungsglasfaser (3) in einem Wellenlängenband im Bereich von 978 nm kommenden Hochleistungs-Laserstrahl zu empfangen und den Hochleistungs-Laserstrahl frequenzmäßig zu wandeln, um den Hochleistungs-Laserstrahl in einem anderen Wellenlängenband von 489 nm zu erzeugen.

4. Faserlaser gemäß Anspruch 3, **dadurch gekennzeichnet, daß** er ein optisches Filtermittel (13) aufweist, das zwischen einem Ausgangsende der Signalverstärkungsglasfaser (3) und einem Eingang des optischen Frequenzwandlers (14) angeordnet ist, wobei das optische Filtermittel (13) dazu ausgelegt ist, eine optische Strahlung mit der Hochleistungs-Pumpwellenlänge von einer optischen Strahlung mit der Wellenlänge des verstärkten optischen Signals zu trennen.

5. Faserlaser gemäß einem der Ansprüche 1 bis 4, **dadurch gekennzeichnet, daß** er ein optisches Pumpkopplungmittel (8) aufweist, das dazu ausgelegt ist, die von den Pumplaserdioden (7a, 7b, 7c, 7d, 7e, 7f) kommenden Pumplaserstrahlen zu empfangen und die Pumplaserstrahlen in die optische Pumpverstärkungsglasfaser (4) einzukoppeln.

6. Faserlaser gemäß einem der Ansprüche 1 bis 5, **dadurch gekennzeichnet, daß** er optische Kopplungsmittel (12) aufweist, die dazu ausgelegt sind, das zu verstärkende optische Quellsignal und die optische Hochleistungs-Pumpstrahlung in die Signalverstärkungsglasfaser (3) einzukoppeln, wobei die optischen Kopplungsmittel (12) einen Multiplexer-Faserkoppler aufweisen, der dazu ausgelegt ist, die Pumplaserstrahlung mit einer Wellenlänge von 930 nm mit dem zu verstärkenden Signal im Bereich von 978 nm zu kombinieren, um sie direkt in den Kern der Verstärkungsfaser (3) einzukoppeln.

7. Faserlaser gemäß einem der Ansprüche 1 bis 6, **dadurch gekennzeichnet, daß** der Oszillator (1) eine mit Fasern ausgestattete Laserdiode aufweist, die mit einem Impulsgenerator gekoppelt ist, und daß der Faserlaser dazu ausgelegt ist, Hochleistungs-Laserimpulse zu erzeugen.

## Claims

1. A high-power and fully fibered optical fiber laser comprising:
- an oscillator (1) adapted to emit a source optical signal to be amplified, said oscillator (1) comprising a fibered laser diode emitting at a wavelength of about 978 nm,
- a pump laser (5) adapted to emit a high-power pump optical radiation,
- a signal-amplifying optical fiber (3), adapted to receive said source optical signal and said high-power pump optical radiation,
- wherein said pump laser (5) comprises a plurality of fibered multimode pump laser diodes (7a, 7b, 7c, 7d, 7e, 7f) emitting at 806 nm and a fully fibered laser cavity, said laser cavity comprising a double-clad fiber having a leaky-mode refractive index profile, of W-shaped type, and a neodymium-doped single-mode core (4), the double-clad fiber having a length of 25 m, a clad diameter of about 125 microns, a core diameter of about 5 microns, an optical fiber Bragg grating (9) forming an end of said laser cavity and a fiber reflector (11) forming the other end of said laser cavity, said double-clad fiber being adapted to generate a laser radiation at a wavelength of about 930 nm when it is optically pumped by a pump radiation at a wavelength of 806 nm coming from the plurality of pump laser diodes (7a, 7b, 7c, 7d, 7e, 7f) and injected into the multimode clad of the double-clad fiber, so that said laser cavity emits a high-power pump laser radiation at the wavelength of 930 nm, and
- said signal-amplifying optical fiber (3) comprises an Ytterbium doped single-mode optical fiber section, so as to generate a high-power laser beam in the vicinity of 978 nm, when said signal-amplifying optical fiber (3) is optically pumped by said high-power pump optical radiation at the wavelength of 930 nm.

2. The fiber laser according to claim 1, **characterized in that** said signal-amplifying optical fiber (3) has a high ion-doping rate so that the length of said single-mode optical fiber section of said signal-amplifying optical fiber (3) is lower than a few tens of centimeters, specially said length is of 19 cm ± 0.5 cm.

3. The fiber laser according to one of claims 1 or 2, **characterized in that** it comprises an optical frequency converter (14), said converter (14) being a second harmonic generator (14) adapted to receive said high-power laser beam coming from said signal-amplifying optical fiber (3) in a wavelength band in the vicinity of 978 nm and to frequency-convert said high-power laser beam so as to generate said high-power laser beam in another wavelength band at 498 nm.

4. The fiber laser according to claim 3, **characterized in that** it comprises an optical filtering means (13) arranged between an output end of said signal-amplifying optical fiber (3) and an input of said optical frequency converter (14), said optical filtering means (13) being adapted to separate an optical radiation at the high-power pump wavelength from an optical radiation at the wavelength of said amplified optical signal.

5. The fiber laser according to one of claims 1 to 4, **characterized in that** it comprises an optical pump coupling means (8) adapted to receive the pump laser radiations coming from said pump laser diodes (7a, 7b, 7c, 7d, 7e, 7f) and to couple said pump laser radiations to said pump amplifying optical fiber (4).

6. The fiber laser according to one of claims 1 to 5, **characterized in that** it comprises optical coupling means (12) adapted to couple said source optical signal to be amplified and said high-power pump optical radiation, respectively, in said signal-amplifying optical fiber (3), said optical coupling means (12) comprising a fiber multiplexer coupler (12) adapted to combine the pump at a wavelength of 930 nm and the signal to be amplified in the vicinity of 978 nm so as to couple them directly in the core of the amplifying fiber (3).

7. The fiber laser according to one of claims 1 to 6, **characterized in that** said oscillator (1) comprises a fibered laser diode coupled to a pulse generator and **in that** said fiber laser is adapted to generate high-power laser pulses.
